# EUROPEAN PATENT APPLICATION

(11) **EP 2 375 369 A1**
(43) Date of publication of application: **12.10.2011**
(21) Application number: 11160976.4
(22) Date of filing: 04.04.2011
(51) Int. Cl.: G06Q 10/00

(54) **Method of providing autonomic management of software system, recording medium storing program for performing the same, and system having function of autonomic software management**

(30) Priority: 09.04.2010 KR 20100032564
(71) Applicant: Postech Academy-Industry Foundation, Pohang-si (KR)
(72) Inventor: Hong, Won-Ki, Pohang-si (KR); Kang, Joon-Myung, Pohang-si (KR)
(74) Representative: Zimmermann, Tankred Klaus

(57) **Abstract**

Provided are a method of providing autonomic management of a software system, a recording medium storing a program for executing the method, and a system having a function of autonomic software management. When a request for a service is received from a user, all configurations of a system capable of providing the requested service are obtained from a dynamic feature model, a configuration corresponding to the requested service is obtained among all of the obtained configurations on the basis of a previously set policy to reconfigure resources of the system, and the requested service is provided on the basis of the reconfigured resources. Accordingly, it is possible to provide a service optimized for an environment that varies in real time without user intervention.

## Description

This application claims priority to Korean Patent Application No. 10-2010-0032564 filed on April 9, 2010 in the Korean Intellectual Property Office (KIPO), the entire contents of which are hereby incorporated by reference.

### BACKGROUND

### 1. Technical Field

Example embodiments of the present invention relate in general to a software development method, and more specifically, to a method of providing autonomic management of a software system capable of providing an optimized configuration for a system on the basis of information dynamically varying at runtime, a recording medium storing a program for executing the method, and a system having a function of autonomic software management.

### 2. Related Art

Product line engineering (PLE) is a new engineering discipline that provides an effective method of rapidly developing software variously specialized in the same domain by applying a systematic reuse technique to software development. In other words, PLE is a methodology of analyzing a domain to extract common points and different points between various applications in one domain, defining reusable product line assets on the basis of the common points and different points, and thereby developing the same product-line software.

Among methods for PLE, feature-oriented software development (FOSD) suggested by CMU SEI in 1990 is most frequently used. In FOSD, a domain expert defines a feature model by analyzing common points and different points between products according to features, so that an application program developer can develop a new product in a short time on the basis of the defined feature model.

To be specific, in conventional FOSD, a domain expert analyzes lines of products, builds a product line reuse library on the basis of the analyzed product lines, and then defines relation between the lines using a feature model. Subsequently, an application engineer readily develops new software on the basis of the feature model according to system requirements of the corresponding software system.

The above-described feature-oriented software development can effectively make use of software development time and cost. However, since a software developer passively selects a feature in consideration of a given environment and statically configures a software system, it is impossible to provide a system dynamically optimized for an environment that varies in real time when the software system runs, and user intervention is required.

### SUMMARY

Accordingly, example embodiments of the present invention are provided to substantially obviate one or more problems due to limitations and disadvantages of the related art.

Example embodiments of the present invention provide a method of providing autonomic management of a software system capable of providing a system optimized for an environment that varies in real time.

Other example embodiments of the present invention provide a recording medium storing a program for executing the method of providing autonomic management of a software system.

Still other example embodiments of the present invention provide a system having a function of autonomic software management capable of providing a system optimized for an environment that varies in real time.

In some example embodiments, a method of providing autonomic management of a software system includes: receiving a request for a service from a user; obtaining all configurations of a system capable of providing the requested service from a dynamic feature model; obtaining a configuration corresponding to the requested service among all of the obtained configurations on the basis of a previously set policy; reconfiguring resources of the system on the basis of the obtained configuration; and providing the requested service on the basis of the reconfigured resources. The dynamic feature model may indicate a configuration of an object operable when the software system runs. The dynamic feature model may include a runtime feature defining values varying when the system in which the software system is installed runs. Obtaining the configuration corresponding to the requested service among all of the obtained configurations on the basis of the previously set policy may include obtaining the most appropriate configuration for the requested service among all of the obtained configurations on the basis of the runtime feature of the system. The method of providing autonomic management of a software system may further include, before obtaining the configuration corresponding to the requested service among all of the obtained configurations on the basis of the previously set policy, obtaining context information from the system or a surrounding physical environment. Obtaining the configuration corresponding to the requested service among all of the obtained configurations on the basis of the previously set policy may include obtaining the configuration corresponding to the requested service among all of the obtained configurations on the basis of the previously set policy and the obtained context information.

In other example embodiments, a recording medium stores a program for executing a method of providing autonomic management of a software system, the program performing: obtaining all configurations of a system capable of providing a requested service from a dynamic feature model; obtaining a configuration corresponding to the requested service among all of the obtained configurations on the basis of a previously set policy; reconfiguring resources of the system on the basis of the obtained configuration; and providing the requested service on the basis of the reconfigured resources.

In still other example embodiments, a system having a function of autonomic software management includes: a dynamic feature model configured to provide all configurations of a system capable of providing a requested service; an autonomic manager configured to provide a configuration corresponding to the requested service among all of the obtained configurations on the basis of previously set policy information; and a core system configured to receive the configuration for the requested service from the autonomic manager, reconfigure resources of the system on the basis of the received configuration, and then provide the service to a user on the basis of the reconfigured resources. The system may further include: a policy manager configured to receive a policy set by the user and provide the received policy or a goal corresponding to the received policy to the autonomic manager; and a context manager configured to collect context information from the system or a surrounding physical environment and provide the collected context information to the autonomic manager. The autonomic manager may provide the configuration corresponding to the requested service among all of the obtained configurations of the system on the basis of the previously set policy information and the context information. The dynamic feature model may include a runtime feature defining values varying when the system runs. The autonomic manager may provide the configuration corresponding to the requested service among all of the obtained configurations of the system on the basis of the runtime feature of the system.

### BRIEF DESCRIPTION OF DRAWINGS

Example embodiments of the present invention will become more apparent by describing in detail example embodiments of the present invention with reference to the accompanying drawings, in which:
FIG. 1 is a block diagram of a system performing autonomic software management according to an example embodiment of the present invention;
FIG. 2 is a flowchart illustrating a method for autonomic management of a software system according to an example embodiment of the present invention;
FIG. 3 is a conceptual diagram illustrating relation between a static feature model and a dynamic feature model applied to a method for autonomic management of a software system according to an example embodiment of the present invention;
FIG. 4 is a table in which a static feature model and a dynamic feature model applied to a method for autonomic management of a software system according to an example embodiment of the present invention are compared;
FIG. 5 shows a constitution of a static feature model of a mobile communication terminal illustrating an example to which a method for autonomic management of a software system according to an example embodiment of the present invention is applied;
FIG. 6 shows a constitution of a dynamic feature model of a mobile communication terminal illustrating an example to which a method for autonomic management of a software system according to an example embodiment of the present invention is applied; and
FIG. 7 illustrates states of a mobile communication terminal that is autonomously managed on the basis of the dynamic feature model of a mobile communication terminal shown in FIG. 6.

### DESCRIPTION OF EXAMPLE EMBODIMENTS OF THE PRESENT INVENTION

Example embodiments of the present invention are disclosed herein. However, specific structural and functional details disclosed herein are merely representative for purposes of describing example embodiments of the present invention, however, example embodiments of the present invention may be embodied in many alternate forms and should not be construed as limited to example embodiments of the present invention set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*i.e.,* "between" versus "directly between," "adjacent" versus "directly adjacent," etc.).

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It should also be noted that in some alternative implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved.

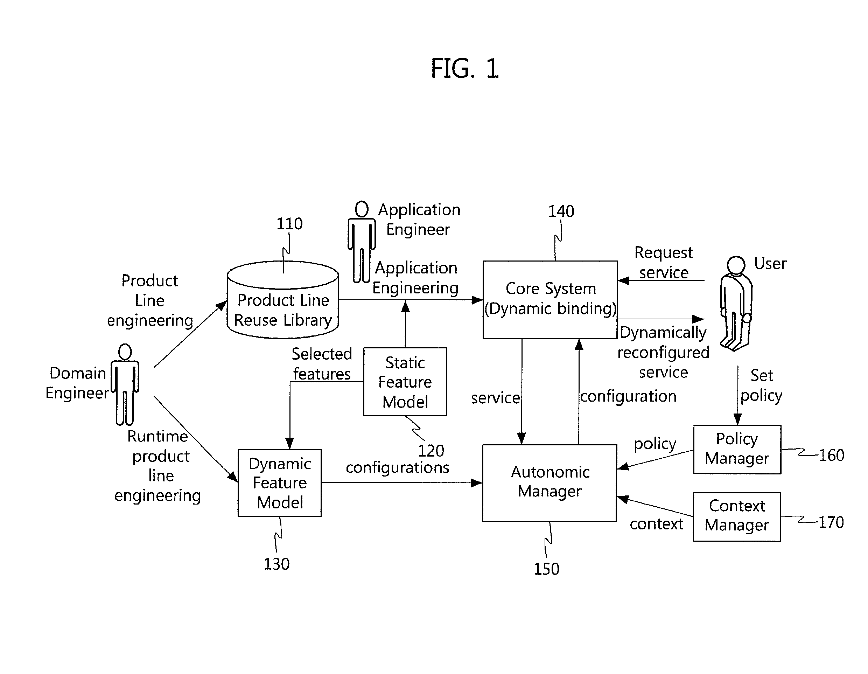

FIG. 1 is a block diagram of a system performing autonomic software management according to an example embodiment of the present invention.

Referring to FIG. 1, a domain engineer analyzes product lines, generates a product line reuse library 110 on the basis of the analyzed product lines, and expresses a relation between the analyzed product lines using a static feature model 120.

An application engineer develops software according to requirements of the corresponding software system to be developed on the basis of the static feature model 120.

Also, the domain engineer generates a dynamic feature model 130 for decision-making for reconfiguring a product when a core system 140 runs. Here, the static feature model 120 and the dynamic feature model 130 may be generated when a software system is developed.

In a method of providing autonomic management of a software system according to an example embodiment of the present invention, a conventional feature model is designated as the static feature model 120 with the expansion of conventional feature-oriented software development (FOSD), features that can vary when the software system runs are analyzed on the basis of the static feature model, and the dynamic feature model 130 is newly defined on the basis of the analyzed features.

The dynamic feature model 130 may define all configurations with which the core system 140 operates at runtime. In other words, the dynamic feature model 130 defines how a function selected by the static feature model 120 is activated at runtime.

The core system 140 includes both of hardware in a predetermined domain and a software system installed in the hardware and controlling operation of the hardware. The core system 140 receives a new service request from a user, and provides the received service request information to an autonomic manager 150. Subsequently, the core system 140 receives configuration information for the requested service from the autonomic manager 150, reconfigures system resources on the basis of the received configuration information, and then provides the service to the user on the basis of the reconfigured system resources.

The autonomic manager 150 extracts the most appropriate configuration for the service requested by the user from information about all available configurations of the core system 140 provided by the dynamic feature model 130 on the basis of policy information provided by a policy manager 160 and context information provided by a context manager 170, and provides the extracted configuration information to the core system 140.

The policy manager 160 receives an upper-level policy from the user, and provides a detailed goal corresponding to the received policy or the upper-level policy to the autonomic manager 150.

The context manager 170 collects context information from the core system 140 and/or the surrounding physical environment, and provides the collected context information to the autonomic manager 150.

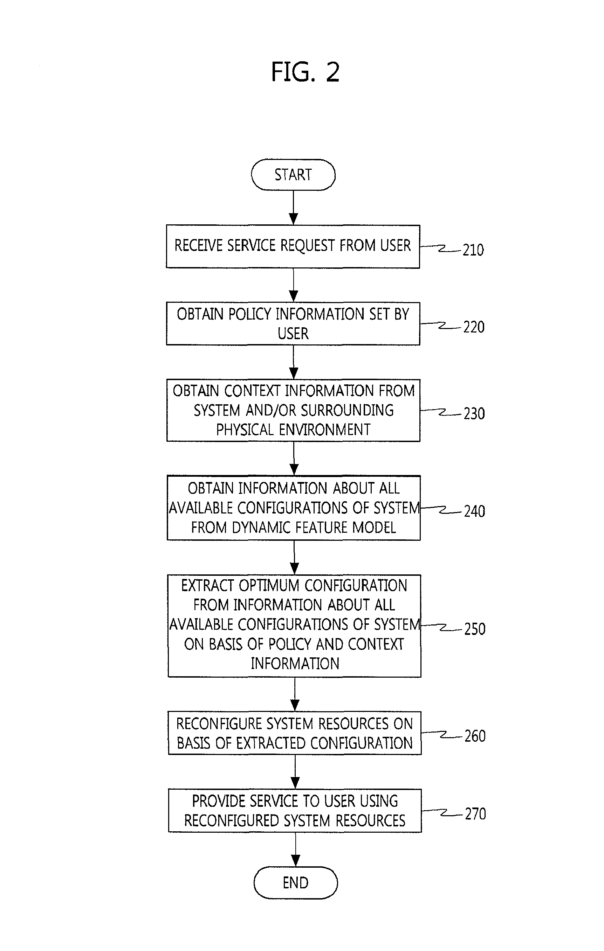

FIG. 2 is a flowchart illustrating a method for autonomic management of a software system according to an example embodiment of the present invention.

A method for autonomic management of a software system according to an example embodiment of the present invention will be described with reference to FIGS. 1 and 2. First, the core system 140 receives a service request from a user (step 210), and provides the received service request information to the autonomic manager 150.

The autonomic manager 150 obtains policy information set by the user from the policy manager 160 (step 220), and obtains context information about the core system and/or the surrounding physical environment from the context manager 170 (step 230).

Also, the autonomic manager 150 obtains information about all available configurations of system from the dynamic feature model 130 (step 240), extracts the most appropriate configuration for the service requested by the user from the information about all available configurations of the system on the basis of the obtained policy information and context information (step 250), and then provides the extracted configuration information to the core system 140.

The core system 140 reconfigures system resources on the basis of the configuration information provided by the autonomic manager 150 (step 260), and provides the service requested by the user using the reconfigured resources (step 270).

In FIG. 2, it is illustrated that after the service request is received (step 210), the policy information set by the user is obtained (step 220), and the context information is obtained (step 230). However, this is merely for convenience, and steps 210 to 230 may be performed substantially out of sequence. Also, step 220 and/or step 230 may be performed after step 240.

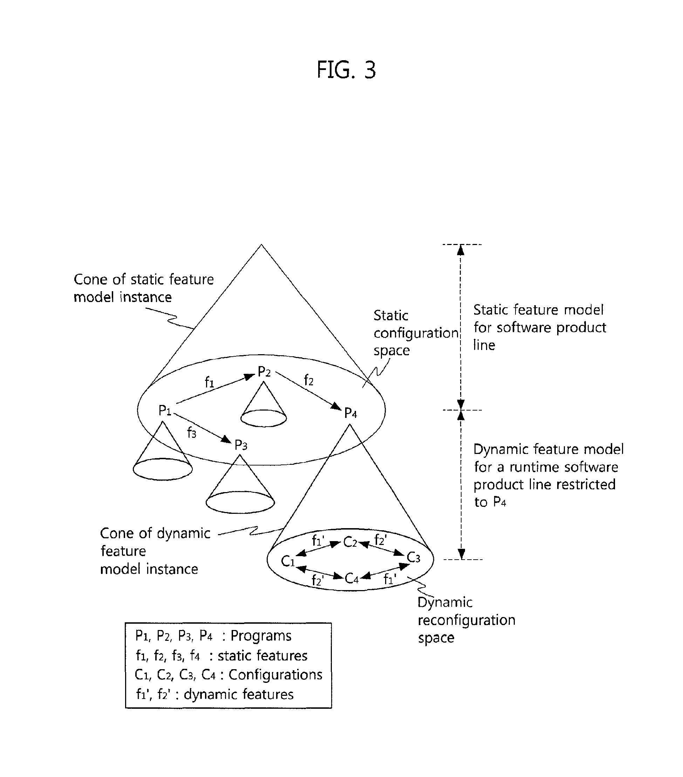

FIG. 3 is a conceptual diagram illustrating a relation between a static feature model and a dynamic feature model applied to a method for autonomic management of a software system according to an example embodiment of the present invention.

In FIG. 3, an upper cone denotes a static feature model for development of a software system, and a lower cone denotes a dynamic feature model whereby one product can be reconfigured at runtime.

In FIG. 3, P₁, P₂, P₃, and P₄ denote programs, and f₁, f₂, f₃, and f₄ denote static features. Also, C₁, C₂, C₃, and C₄ denote configurations, and f₁' and f₂' denote dynamic features.

A static feature model may gradually develop P₂, P₃, and P₄ from P₁, which is a basic software program, using a feature. Assuming that a calculator program having only an addition function is P₁, f₁ is a subtraction function, and f₂ is a division function, P₄ is generated as a calculator program having addition, subtraction and division functions.

A dynamic feature model denotes with which configuration a generated software system operates at runtime, as mentioned above. In other words, when a feature is a program code in a dynamic feature model, the feature is an object of the program code in a dynamic feature model. For example, while the software system runs, the program P₄ may become C₁ having only the addition function on the basis of policy and context information, or may be reconfigured as one of C₂, C₃, and C₄ by adding the subtraction and/or division function. Also, the configurations C₁, C₂, C₃, and C₄ may be modified by adding or removing a dynamic feature according to the policy and context information.

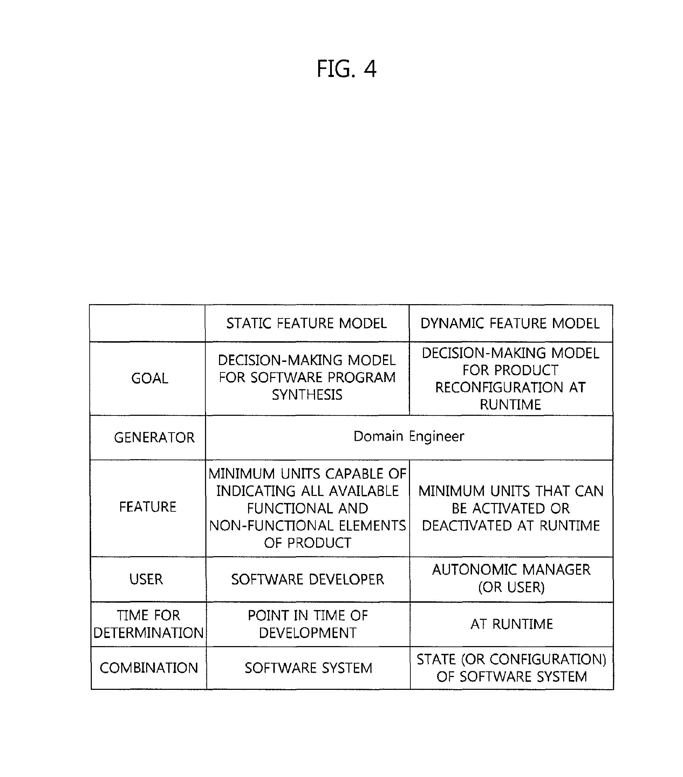

FIG. 4 is a table in which a static feature model and a dynamic feature model applied to a method for autonomic management of a software system according to an example embodiment of the present invention are compared.

Referring to FIG. 4, a static feature model is for program synthesis, and a dynamic feature model is a decision-making model for reconfiguration while a system runs.

The static and dynamic feature models are generated by a domain engineer (or domain expert) when software is developed. The static feature model is determined by a software developer when a software system is developed, and the dynamic feature model is determined by an autonomic manager or user when the system runs.

While a combination of features in a static feature model is a software system, a combination of features in a dynamic feature model is a state (or configuration) while a system runs. This is because, when the software system while the system operates is represented by a finite state machine (FSM), states are independent from each other.

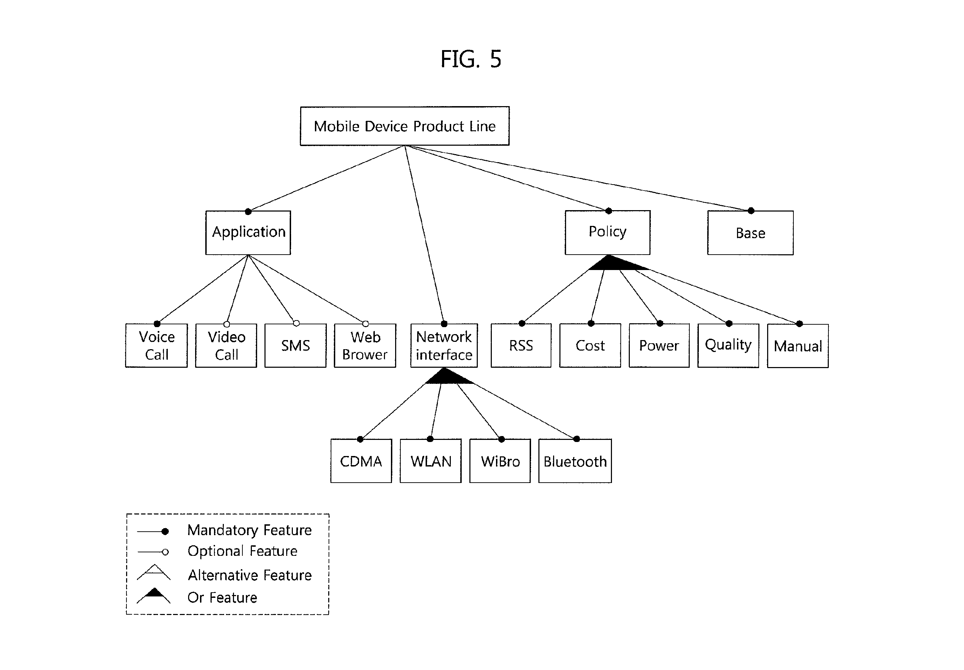

FIG. 5 shows a constitution of a static feature model of a mobile communication terminal illustrating an example to which a method for autonomic management of a software system according to an example embodiment of the present invention is applied.

Software installed in a mobile communication terminal needs to provide a variety of functions according to various types of hardware of the mobile communication terminal, and thus is an appropriate example to which product line engineering (PLE) will be applied.

As a communication means between an expert and a general user in a domain or between developers, a feature model is a domain analysis model schematizing common points and different points between several systems in the domain in AND/OR graphs. In the feature model, a common feature in the domain is represented by a mandatory feature, and a different point between systems is represented by an optional feature, an alternative feature, and an OR feature which enables one or more selections.

A static feature model of a mobile communication terminal will be described with reference to FIG. 5. In a mobile communication terminal, Application is a mandatory feature, and Video Call is an optional feature. The mobile communication terminal may include Application, Network Interface, and also Policy. In this case, a new mobile communication terminal system may be made by adding Application, Network Interface, and Policy on the basis of a relation of a base feature model of the mobile communication terminal.

In the static feature model of the mobile communication terminal shown in FIG. 5,

Application needs to include Voice Call. Also, the static feature model needs to include Policy and at least one network interface among code-division multiple access (CDMA), wireless local area network (WLAN), wireless broadband Internet (WiBro), and Bluetooth.

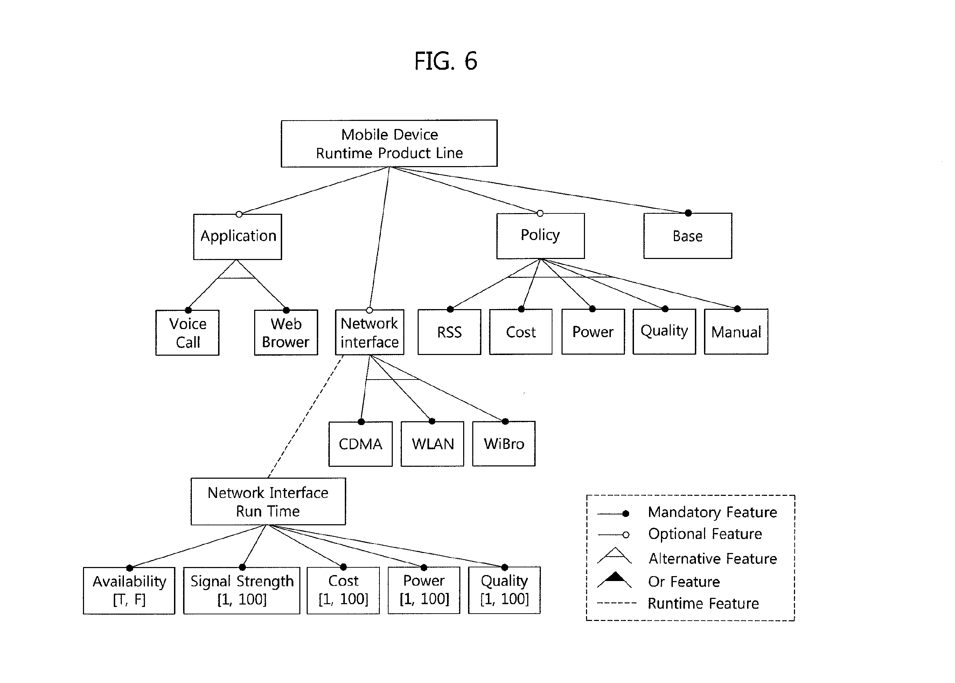

FIG. 6 shows a constitution of a dynamic feature model of a mobile communication terminal illustrating an example to which a method for autonomic management of a software system according to an example embodiment of the present invention is applied.

Referring to FIG. 6, while a static feature model is generated by analyzing functional features of products, a static feature model is generated by analyzing features of a running system. For example, when a software developer selects Voice Call and Web Browser as Application, CDMA, WLAN, and WiBro as Network Interface, and Received Signal Strength (RSS), Cost, Power, Quality, and Manual as a method for selecting a network interface in the static feature model of the mobile communication terminal shown in FIG. 5, the mobile communication terminal is manufactured to include all of the functions.

A dynamic feature model represents how a system can vary at runtime. For example, in a dynamic feature model of a running mobile communication terminal shown in FIG. 6, Application is not executed or only one of Voice Call and Web Browser can be executed. Network Interface is not activated, or only one of CDMA, WLAN, and WiBro can be activated. Only one of RSS, Cost, Power, Quality, and Manual can be selected as Policy.

In a mobile communication terminal having a dynamic feature model as shown in FIG. 6, an autonomic manager manages a system according to a policy set on the basis of the dynamic feature model. For example, the autonomic manager may select an optimum network interface on the basis of a policy set for each application.

In the dynamic feature model, values that can vary at runtime as new features that are not in a static feature model are defined as runtime features. In the case of Network Interface of FIG. 6, Availability, Signal Strength, Cost Model, Power Consumption Rate, Quality, etc. are features that can dynamically vary while a system runs, and the autonomic manager selects an optimum network interface using the above-mentioned runtime features while the mobile communication terminal runs. For example, availability of CDMA becomes "F" (false) in a place where CDMA cannot be used, and the autonomic manager selects the most appropriate network interface using such values of runtime features.

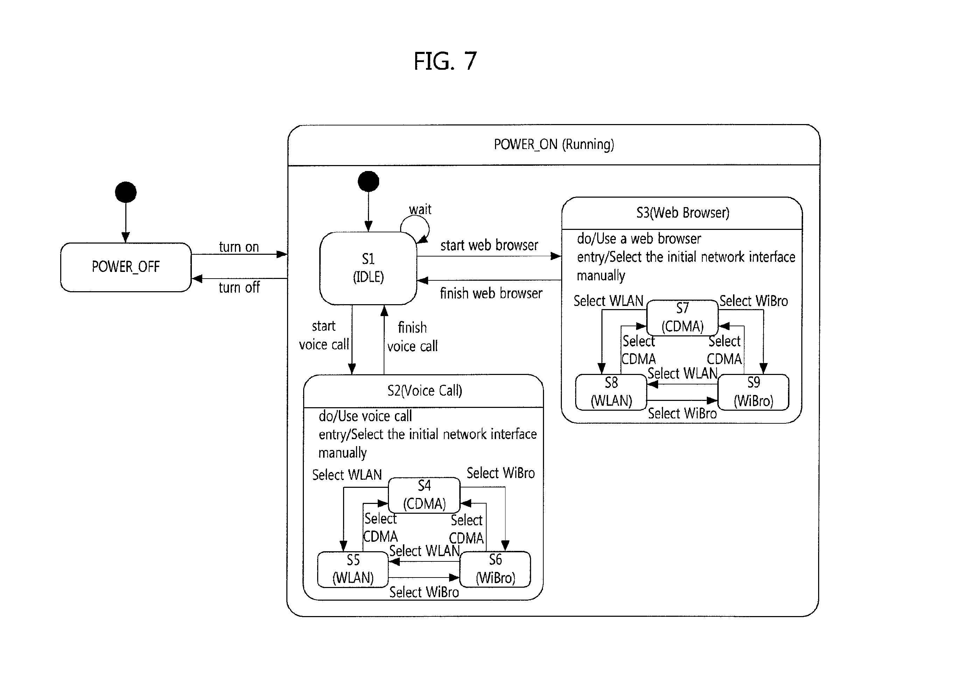

FIG. 7 illustrates states of a mobile communication terminal that is autonomously managed on the basis of the dynamic feature model of a mobile communication terminal shown in FIG. 6.

Referring to FIG. 7, when power is turned on, a mobile communication terminal is switched from a power-off state POWER_OFF to a power-on state POWER_ON, and starts operating with an idle state S1 in the power-on state POWER_ON.

Subsequently, the mobile communication terminal is switched to a voice-call state S2 or a web-browser state S3 in response to manipulation of a user.

When states are changed as described above to use voice call or a web browser, a network interface is activated. In an initial stage in which the network interface is used, the user manually selects one network interface among CMDA, WLAN, and WiBro. Thereafter, the mobile communication terminal autonomously selects an optimum network interface on the basis of a runtime feature based on a dynamic feature model, a previously set policy, and/or collected context information.

For example, when the user selects the voice-call state S2 in the idle state S1 of the mobile communication terminal and selects WiBro S6 as an initial network interface, an autonomous manager of the mobile communication terminal may autonomously select WLAN S5 as a network interface at a predetermined point in time on the basis of a runtime feature that varies while the mobile communication terminal is running and a policy previously set by the user.

The above-described method of providing autonomic management of a software system and the above-described system having a function of autonomic software management according to example embodiments of the present invention statically configure a software system, extract a configuration optimized for a requested service using a dynamic feature model including a runtime feature, which reflects an environment varying in real time while the system is running, reconfigure resources of the system using the extracted configuration, and then provide the service.

Therefore, the method and system can provide a service optimized for an environment that varies in real time without user intervention, and due to this characteristic, can be used for embedded systems, rockets, military software systems, etc. requiring a software system that can be dynamically reconfigured according to a required goal.

While the example embodiments of the present invention and their advantages have been described in detail, it should be understood that various changes, substitutions and alterations may be made herein without departing from the scope of the invention.

## Claims

1. A method of providing autonomic management of a software system, comprising:
receiving a request for a service from a user;
obtaining all configurations of a system capable of providing the requested service from a dynamic feature model;
obtaining a configuration corresponding to the requested service among all of the obtained configurations on the basis of a previously set policy;
reconfiguring resources of the system on the basis of the obtained configuration; and
providing the requested service on the basis of the reconfigured resources.

2. The method of claim 1, wherein the dynamic feature model indicates a configuration of an object operable when the software system runs.

3. The method of claim 1, wherein the dynamic feature model includes a runtime feature defining values varying when the system in which the software system is installed runs.

4. The method of claim 3, wherein obtaining the configuration corresponding to the requested service among all of the obtained configurations on the basis of the previously set policy includes obtaining a most appropriate configuration for the requested service among all of the obtained configurations on the basis of the runtime feature of the system.

5. The method of claim 1, further comprising, before obtaining the configuration corresponding to the requested service among all of the obtained configurations on the basis of the previously set policy, obtaining context information from the system or a surrounding physical environment.

6. The method of claim 5, wherein obtaining the configuration corresponding to the requested service among all of the obtained configurations on the basis of the previously set policy includes obtaining the configuration corresponding to the requested service among all of the obtained configurations on the basis of the previously set policy and the obtained context information.

7. A recording medium having a program of instructions readable and executable by a digital processor for performing autonomic software management recorded thereon, the program being tangibly embodied, wherein the program performs:
obtaining all configurations of a system capable of providing a requested service from a dynamic feature model;
obtaining a configuration corresponding to the requested service among all of the obtained configurations of the system on the basis of a previously set policy;
reconfiguring resources of the system on the basis of the obtained configuration; and
providing the requested service on the basis of the reconfigured resources.

8. A system having a function of autonomic software management, comprising:
a dynamic feature model configured to provide all configurations of a system capable of providing a requested service;
an autonomic manager configured to provide a configuration corresponding to the requested service among all of the obtained configurations on the basis of previously set policy information; and
a core system configured to receive the configuration for the requested service from the autonomic manager, reconfigure resources of the system on the basis of the received configuration, and then provide the service to a user on the basis of the reconfigured resources.

9. The system of claim 8, further comprising:
a policy manager configured to receive a policy set by the user and provide the received policy or a goal corresponding to the received policy to the autonomic manager; and
a context manager configured to collect context information from the system or a surrounding physical environment and provide the collected context information to the autonomic manager.

10. The system of claim 9, wherein the autonomic manager provides the configuration corresponding to the requested service among all of the obtained configurations of the system on the basis of the previously set policy information and the context information.

11. The system of claim 8, wherein the dynamic feature model includes a runtime feature defining values varying when the system runs.

12. The system of claim 11, wherein the autonomic manager provides the configuration corresponding to the requested service among all of the obtained configurations of the system on the basis of the runtime feature of the system.
